# DEMANDE DE BREVET EUROPEEN

(11) **EP 2 428 300 A1**
(43) Date de publication de la demande: **14.03.2012**
(21) Numéro de dépôt: 11180896.0
(22) Date de dépôt: 12.09.2011
(51) Int. Cl.: B23K 9/028, B23K 9/173, B23K 9/23, B23K 33/00

(54) **Procédé pour souder des pièces en acier avec au moins une des pièces en acier duplex ; Cuve comprenant des pièces en acier avec au moins une pièce en acier duplex**

(30) Priorité: 14.09.2010 FR 1057328
(71) Demandeur: Boccard, 69100 Villeurbanne (FR)
(72) Inventeur: Grégoire, Philippe, 42590 VENDRANGES (FR)
(74) Mandataire: Chevalier, Renaud Philippe

(57) **Abrégé**

Ce procédé comprend les étapes consistant à mettre en oeuvre une tête de soudage MIG (51), déplacer cette tête de soudage (51) le long des bords (21.1,31.1) au moyen d'un dispositif motorisé et avancer une partie terminale (7) jusqu'aux bords (21.1,31.1) et à une vitesse prédéterminée. Au moins une pièce (21,31) est en acier duplex. Les bords (21.1,31.1) définissent un jeu (21,31) qui est inférieur ou égal à 1,2 mm. Les bords (21.1,31.1) présentent des chanfreins respectifs qui sont évasés vers une surface externe des pièces, le chanfrein de l'un des bords (31.1) étant plus incliné que le chanfrein de l'autre bord (21.1).

## Description

La présente invention concerne un procédé pour souder des pièces en acier. Par ailleurs, la présente invention concerne une cuve comprenant des pièces en acier soudées entre elles.

La présente invention trouve application dans le domaine du soudage MIG, notamment pour réaliser des cuves en acier soudées.

Un procédé de soudage MIG de l'art antérieur peut être automatisé en mettant en oeuvre une tête de soudage de type MIG qui est déplacée le long des bords à souder au moyen d'un dispositif motorisé. Le fil de soudure avance automatiquement jusqu'aux bords à souder. Un tel procédé de soudage MIG automatisé peut être appliqué à des aciers au carbone et inoxydables communs, afin d'atteindre une vitesse de soudage supérieure au soudage MIG manuel.

Cependant, un tel procédé ne permet pas de souder entre elles des pièces dont au moins une est en acier duplex, également dénommé acier austéno-ferritique. Comme certains aciers duplex dégagent beaucoup d'azote lors du soudage, il est nécessaire de ménager un jeu minimal entre bords à souder, pour éviter les défauts de soudure. Pour opérer un soudage MIG sur des pièces dont au moins une est en acier duplex, il est connu que le jeu minimal entre bords à souder doit être supérieur à 3 mm, voire à 4 mm, notamment pour permettre l'évacuation de l'azote et ainsi éviter les défauts de soudure. Or, un jeu minimal supérieur à 3 mm est incompatible avec un soudage MIG automatisé, car un fil de soudure a un diamètre inférieur à 2 mm. Actuellement, pour réaliser un soudage MIG de pièces dont au moins une est en acier duplex, seul un opérateur peut positionner avec précision le fil de soudure.

Un objet de la présente invention est de résoudre, en tout ou partie, les problèmes mentionnés ci-avant.

A cet effet, l'invention a pour objet un procédé, pour souder des pièces en acier suivant des bords à souder, le procédé comprenant les étapes :
- mettre en oeuvre une tête de soudage de type MIG comprenant un fil de soudure ;
- déplacer la tête de soudage le long des bords au moyen d'un dispositif motorisé ;
- avancer une partie terminale du fil de soudure jusqu'aux bords et à une vitesse prédéterminée ;
- Le procédé se caractérise en ce qu'au moins une pièce est en acier duplex, en ce que les bords définissant un jeu qui est inférieur ou égal à 1 mm, de préférence égal à 0 mm, et en ce que les bords présentent des chanfreins respectifs qui sont évasés vers une surface externe des pièces, le chanfrein de l'un des bords étant plus incliné que le chanfrein de l'autre bord.

En d'autres termes, un procédé conforme à l'invention met en oeuvre des pièces dont le jeu entre bords à souder est quasiment nul et qui ont des chanfreins dissymétriques.

Ainsi, on peut réaliser un soudage MIG entièrement automatisé qui réalise des soudures de qualité à grande vitesse.

Selon un mode de réalisation, la partie terminale est avancée jusqu'aux bords suivant une direction d'avancement qui est substantiellement perpendiculaire à la direction suivant laquelle est mesuré le jeu.

Ainsi, le fil de soudure se positionne facilement par rapport aux bords à souder.

Selon un mode de réalisation, le chanfrein le plus incliné forme, avec la direction d'avancement, un angle compris entre 48° et 72°, de préférence égal à 60°, et dans lequel le chanfrein le moins incliné forme, avec la direction d'avancement, un angle compris entre -16° et -24°, de préférence égal à -20°.

Ainsi, de tels angles de chanfrein permettent d'optimiser l'évacuation des gaz issus du soudage d'un acier duplex.

Selon un mode de réalisation, la partie terminale est substantiellement horizontale, et dans lequel un bord supérieur est situé au-dessus de la partie terminale et un bord inférieur est situé au-dessous de la partie terminale.

Ainsi, on réalise de façon automatisée un soudage dit « en corniche », ce qui permet de souder des pièces disposées verticalement, y compris à hauteur élevée, en limitant les risques de défauts dans les soudures et les dangers pour les opérateurs.

Selon un mode de réalisation, une extrémité interne d'un chanfrein est située en regard d'une extrémité interne de l'autre chanfrein.

Ainsi, on peut positionner rapidement et précisément les bords à souder en respectant le jeu minimal.

Selon un mode de réalisation, le procédé comprend en outre l'étape d'aligner des cordons de soudure par écrasement des bords.

Ainsi, un tel écrasement minimise les désalignements avant soudage et les retraints après soudage, en particulier sur des pièces de faible épaisseur.

Selon un mode de réalisation, les pièces ont des formes d'anneaux axisymétriques, les bords étant formés par des arêtes elliptiques des pièces, de préférence circulaires, et le dispositif motorisé déplace la tête de soudage autour d'un axe de révolution.

Ainsi, on peut souder des pièces à symétrie de révolution.

Selon un mode de réalisation, les pièces ont au moins une dimension supérieure à 6 m, et le procédé est mis en oeuvre en extérieur.

Ainsi, un procédé de soudage conforme à l'invention dispense de placer les pièces à souder dans un bâtiment.

Selon un mode de réalisation :
- l'intensité du courant formant arc électrique est comprise entre 140 A et 215 A, de préférence égale à 175 A ;
- la tension formant arc électrique est comprise entre 15 V et 35 V, de préférence égale à 25 V ;
- la vitesse prédéterminée est comprise entre 3 mm/s et 6 mm/s, de préférence égale à 4,5 mm/s ; et/ou
- le débit d'un gaz inerte projeté sur la partie terminale est compris entre 10 NL/min et 40 NL/min, de préférence entre 20 NL/min et 25 NL/min.

Ainsi, un procédé conforme à l'invention est optimisé pour réaliser des soudures de qualité. Avantageusement, l'intensité, la tension et la vitesse prédéterminée sont choisis pour garantir une énergie de soudage compatible avec les matériaux des pièces mises en oeuvre.

Selon un mode de réalisation, un opérateur est embarqué sur le dispositif motorisé de façon à superviser les opérations de soudage.

Ainsi, l'opérateur peut surveiller les paramètres de soudage.

Par ailleurs, la présente invention a pour objet une cuve comprenant des pièces en acier présentant des bords à souder, la cuve étant caractérisé en ce qu'au moins une pièce est en acier duplex et en ce que les bords définissent un jeu qui est inférieur ou égal à 1 mm, de préférence égal à 0 mm, et en ce que les bords présentent des chanfreins respectifs qui sont évasés vers une surface externe des pièces, le chanfrein de l'un des bords étant plus incliné que le chanfrein de l'autre bord.

Ainsi, une telle cuve présente des soudures de qualité uniforme et élevée et qui peuvent être réalisées rapidement.

La présente invention sera bien comprise et ses avantages ressortiront aussi à la lumière de la description qui va suivre, qui est donnée uniquement à titre d'exemple non limitatif et qui est faite en référence aux dessins annexés, dans lesquels :
- la figure 1 est une vue en perspective d'une cuve conforme à un premier mode de réalisation de l'invention en cours de soudage selon un procédé conforme à l'invention ;
- la figure 2 est une vue en section, suivant la ligne I-I à la figure 1, d'une partie de la cuve de la figure 1 ;
- la figure 3 est une vue similaire à la figure 2 d'une cuve conforme à un deuxième mode de réalisation de l'invention après soudage selon un procédé conforme à l'invention.

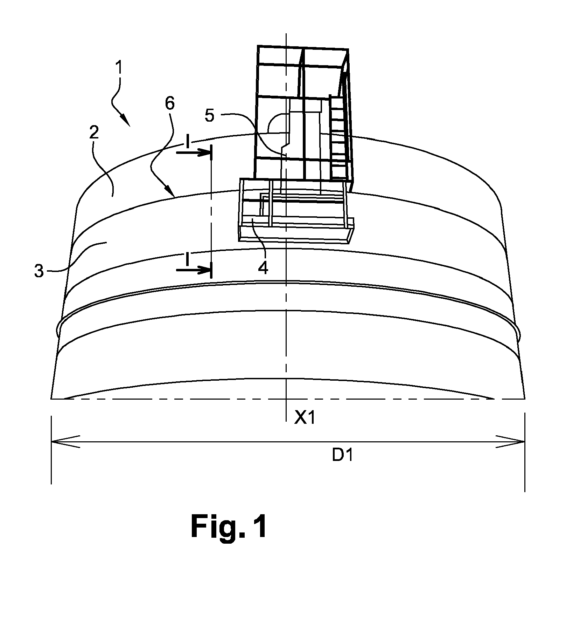

La figure 1 illustre une cuve 1 comprenant plusieurs pièces, dont une pièce supérieure 2 et une pièce inférieure 3 sont en cours de soudage. Un dispositif motorisé 4 déplace une tête de soudage 5 qui est de type MIG (acronyme de l'anglais « *Metal Inert Gas* »), de façon à réaliser un cordon de soudure non représenté le long d'une ligne de jonction 6.

Chaque pièce est en forme d'anneau circulaire d'axe de révolution X1, autour duquel le dispositif motorisé 4 déplace la tête de soudage 5. Les pièces formant la cuve 1, dont la pièce supérieure 2 et la pièce inférieure 3, sont en acier duplex. Dans l'exemple des figures, la pièce supérieure 2 et la pièce inférieure 3 sont en acier duplex de nuance EN 1.4162 (ou ASTM S32101 ou LDX2101® chez le fabricant Outokumpu). On réalise donc un assemblage homogène.

Les pièces de la cuve 1 ont un diamètre D1 d'environ 14 m. Dans l'exemple des figures, le soudage de la cuve 1 est mis en oeuvre en extérieur, c'est-à-dire hors de tout bâtiment.

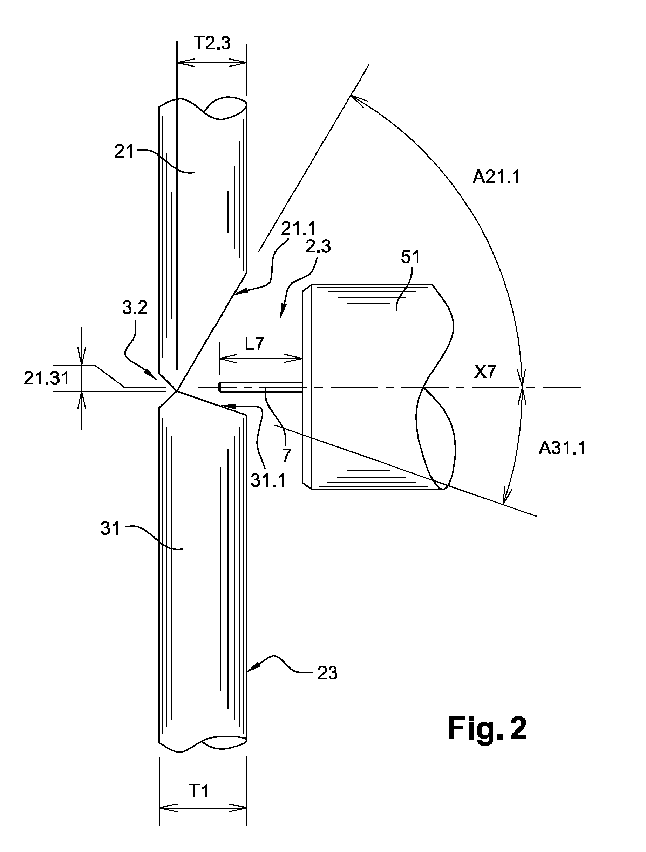

La figure 2 illustre les bords 21 et 31 à souder le long de la ligne 6. Les bords 21 et 31 sont formés par des arêtes circulaires respectives de la pièce supérieure 2 et de la pièce inférieure 3. Le bord 21 forme donc le bord supérieur et le bord 31 le bord inférieur pour les cordons de soudure. Des cordons de soudure sont déposés de chaque côté des bords 21 et 31, c'est-à-dire sur l'endroit 2.3 et sur l'envers 3.2 de la ligne de soudure 6.

Un procédé conforme à l'invention premet de souder les pièces 2 et 3 suivant les bords 21 et 31. Le dispositif motorisé 4 déplace la tête de soudage 5 le long des bords 21 et 31. La tête de soudage 5 fait avancer une partie terminale 7 d'un fil de soudure jusqu'aux bords 21 et 31. Avantageusement, l'avance de la partie terminale 7 se fait à vitesse constante, par exemple à 4,6 mm/s.

La tête de soudage 5 met en oeuvre un générateur de tension non représenté, qui applique une tension d'environ 25 V et un courant d'environ 175 A, de façon à former un arc électrique entre la partie terminale 7 et les bords 21 et 31.

Dans l'exemple de la figure 2, la partie terminale 7 est avancée jusqu'aux bords 21 et 31 suivant une direction d'avancement X7 qui est horizontale. La direction d'avancement X7 est donc substantiellement perpendiculaire à la direction suivant laquelle est mesuré le jeu 21.31. En d'autres termes, le fil de soudure est substantiellement horizontal, ce qui réalise une soudure dite « en corniche ». Ainsi, le bord 21 est situé au-dessus de la partie terminale 7 et le bord 31 est situé au-dessous de la partie terminale 7.

La partie terminale 7 dépasse d'une buse de soudage 51 d'une longueur L7 d'environ 8 mm à 10 mm. La buse de soudage 51 projette sur la partie terminale 7 un débit de gaz inerte d'environ 25 NL/min. Le gaz inerte peut être par exemple composé de dioxyde de carbone, d'hélium et d'argon.

Avant le soudage suivant le procédé conforme à l'invention, les bords 21 et 31 sont positionnés avec un jeu 21.31 qui est inférieur ou égal à 1,2 mm, de préférence à 1 mm. Dans l'exemple de la figure 2, le jeu 21.31 est d'environ 0,5 mm.

Le bord 21 présente un chanfrein supérieur 21.1 et le bord 31 présente un chanfrein inférieur 31.1. Les bords 21 et 31 ont une épaisseur T1 d'environ 8,5 mm. Par rapport à l'épaisseur T1, le chanfrein supérieur 21.1 et le chanfrein inférieur 31.1 s'étendent sur une épaisseur T2.3 d'environ 7 mm.

Sur l'endroit 2.3 de la ligne de soudure 6, le chanfrein supérieur 21.1 et le chanfrein inférieur 31.1 sont évasés vers une surface externe 23 des pièces 2 et 3. Comme cela est décrit ci-après, le chanfrein supérieur 21.1 est plus incliné que le chanfrein inférieur 31.1.

Dans l'exemple de la figure 2, le chanfrein supérieur 21.1, le plus incliné, forme avec la direction d'avancement X7 un angle A21.1 d'environ 60°. Le chanfrein inférieur 31.1, le moins incliné, forme avec la direction d'avancement X7 un angle A31.1 d'environ -20°. Dans l'exemple de la figure 2, les angles orientés sont mesurés suivant le sens trigonométrique.

Sur l'envers 3.2, les bords 21 et 31 peuvent présenter des chanfreins symétriques par rapport à la direction d'avancement X7, les angles étant respectivement de 45° et -45°. En effet, l'évacuation de l'azote dégazé par l'acier duplex est optimisée sur l'endroit 2.3.

Entre l'endroit 2.3 et l'envers 3.2, les extrémités internes des chanfreins supérieur 21.1 et inférieur 31.1 sont situées en regard l'une de l'autre. Alternativement, ces extrémités internes pourraient être décalées suivant la direction d'avancement X7.

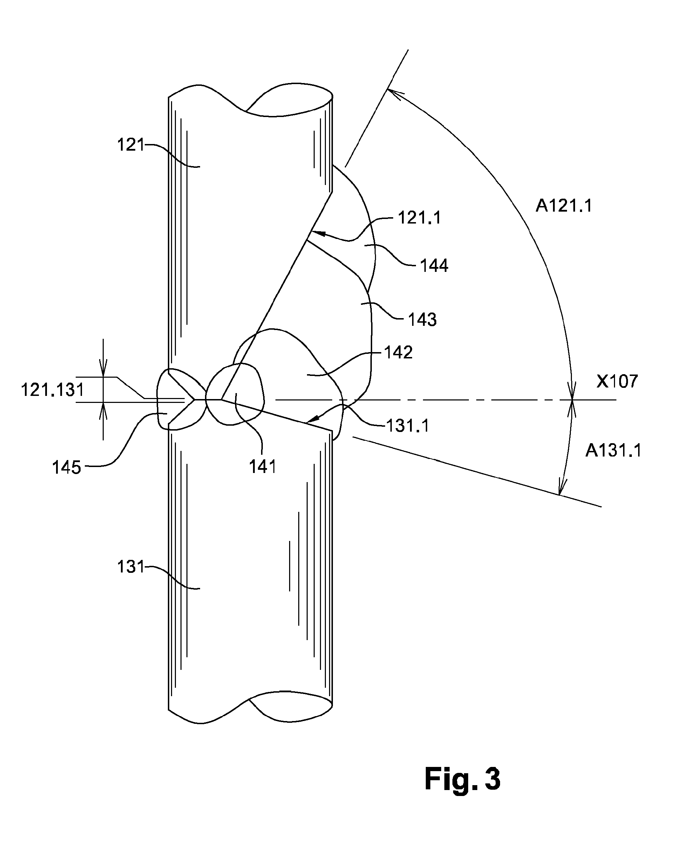

La figure 3 illustre un assemblage de pièces soudées suivant un procédé de soudage conforme à un deuxième mode de réalisation de l'invention. Dans la mesure où le procédé de la figure 3 est semblable au procédé de la figure 2, la description du procédé de la figure 2 donnée ci-avant peut être transposée au procédé de la figure 3, à l'exception des différences énoncées ci-après. Un élément de la figure 3 semblable ou correspondant, par sa structure ou par sa fonction, à un élément de la figure 2 porte ci-après la même référence numérique augmentée de 100.

On définit ainsi un bord supérieur 121 et un bord inférieur 131, un chanfrein supérieur 121.1 et un chanfrein inférieur 131.1, des angles A121.1 etA131.1, ainsi qu'un jeu 121.131.

Le procédé de la figure 3 diffère du procédé de la figure 2, car l'angle A121.1 du chanfrein supérieur 121.1 est d'environ 55° et car l'angle A131.1 du chanfrein supérieur 131.1 est d'environ -35°. Le jeu 121.131 est d'environ 0 mm.

De plus, la figure 3 montre les pièces après leur soudage. Les bords 121 et 131 sont solidarisés au moyen de cinq cordons de soudure, 141, 142, 143, 144 et 145. Quatre cordons de soudure 141, 142, 143 et 144 sont réalisés sur l'endroit et le cordon de soudure 145 est réalisé sur l'envers. Tous les cordons de soudures 141, 142, 143, 144 et 145 sont réalisés de façon automatique par la tête de soudage 5. Alternativement, le cordon de soudure 145 peut être réalisé manuellement.

Par ailleurs, le procédé illustré à la figure 3 comprend en outre une étape consistant à aligner la soudure par écrasement des bords. Cette d'étape d'écrasement est réalisée de façon automatisée par un appareil annexe non représenté qui est embarqué sur le dispositif motorisé 4. Cet appareil comporte deux galets en opposition dans l'axe des bords à souder. De chaque coté, endroit et envers, de la soudure, un actionneur hydraulique permet de mettre en appui et d'exercer un effort sur les galets et sur les bords à souder avant soudage, puis sur les cordons de soudure après soudage, de façon à réaligner dans un premier temps, puis à diminuer les contraintes dans les cordons de soudure.

Selon d'autres modes de réalisation de l'invention non représentés, pris isolément ou selon toute combinaison techniquement admissible :
- Un procédé conforme à l'invention est mis en oeuvre avec seulement une pièce à souder en acier duplex, par exemple de nuance EN 1.4162, l'autre pièce étant en acier austénitique, ce qui permet de réaliser un assemblage hétérogène.
- Les bords à souder s'étendent dans un plan horizontal, plutôt que vertical. La partie terminale du fil de soudure est alors verticale plutôt qu'horizontale.
- Un opérateur peut être embarqué sur le dispositif motorisé de façon à superviser les opérations de soudage.
- Des moyens de meulage entre passes, d'arasage, de polissage des cordons et de grenaillage des cordons de soudures peuvent aussi être embarqués sur le dispositif motorisé, pour réaliser des étapes subséquentes.

## Revendications

1. Procédé, pour souder des pièces (2, 3) en acier suivant des bords (21, 31 ; 121, 131) à souder, le procédé comprenant les étapes :
- mettre en oeuvre une tête de soudage (5) de type MIG comprenant un fil de soudure ;
- déplacer la tête de soudage (5) le long des bords (21, 31 ; 121, 131) au moyen d'un dispositif motorisé (4) ;
- avancer une partie terminale (7) du fil de soudure jusqu'aux bords (21, 31 ; 121, 131) et à une vitesse prédéterminée ;
le procédé étant **caractérisé en ce qu'**au moins une pièce est en acier duplex, **en ce que** les bords (21, 31 ; 121, 131) définissent un jeu (21.31 ; 121.131) qui est inférieur ou égal à 1 mm, de préférence égal à 0 mm, et **en ce que** les bords (21, 31 ; 121, 131) présentent des chanfreins respectifs (21.1, 31.1 ; 121.1, 131.1) qui sont évasés vers une surface externe (23) des pièces (2, 3), le chanfrein (21.1 ; 121.1) de l'un des bords (21 ; 121) étant plus incliné que le chanfrein (31.1 ; 131.1) de l'autre bord (31 ; 131).

2. Procédé selon la revendication 1, dans lequel la partie terminale (7) est avancée jusqu'aux bords (21, 31 ; 121, 131) suivant une direction d'avancement (X7 ; X107) qui est substantiellement perpendiculaire à la direction suivant laquelle est mesuré le jeu (21.31 ; 121.131).

3. Procédé selon la revendication 2, dans lequel le chanfrein le plus incliné (21.1 ; 121.1) forme, avec la direction d'avancement (X7 ; X107), un angle (A21.1 ; A121.1) compris entre 48° et 72°, de préférence égal à 60°, et dans lequel le chanfrein le moins incliné (31.1 ; 131.1) forme, avec la direction d'avancement (X7 ; X107), un angle (A31.1 ; A131.1) compris entre -16° et -24°, de préférence égal à -20°.

4. Procédé selon l'une des revendications précédentes, dans lequel la partie terminale (7) est substantiellement horizontale, et dans lequel un bord supérieur (21 ; 121) est situé au-dessus de la partie terminale (7) et un bord inférieur (31 ; 131) est situé au-dessous de la partie terminale (7).

5. Procédé selon l'une des revendications précédentes, dans lequel une extrémité interne d'un chanfrein (21.1 ; 121.1) est située en regard d'une extrémité interne de l'autre chanfrein (31.1 ; 131.1).

6. Procédé selon l'une des revendications précédentes, comprenant en outre l'étape d'aligner des cordons de soudure (141, 142, 143, 144, 145) par écrasement des bords (121, 131).

7. Procédé selon l'une des revendications précédentes, dans lequel les pièces (2, 3) ont des formes d'anneaux axisymétriques, les bords (21, 31 ; 121, 131) étant formés par des arêtes elliptiques des pièces (2, 3), de préférence circulaires, et dans lequel le dispositif motorisé (4) déplace la tête de soudage (5) autour d'un axe de révolution (X1).

8. Procédé selon la revendication 7, **caractérisé en ce que** les pièces (2, 3) ont au moins une dimension (D1) supérieure à 6 m et **en ce qu'**il est mis en oeuvre en extérieur.

9. Procédé selon l'une des revendications précédentes, dans lequel :
- l'intensité du courant formant arc électrique est comprise entre 140 A et 215 A, de préférence égale à 175 A ;
- la tension formant arc électrique est comprise entre 15 V et 35 V, de préférence égale à 25 V ;
- la vitesse prédéterminée est comprise entre 3 mm/s et 6 mm/s, de préférence égale à 4,5 mm/s ; et/ou
- le débit d'un gaz inerte projeté sur la partie terminale (7) est compris entre 10 NL/min et 40 NL/min, de préférence entre 20 NL/min et 25 NL/min.

10. Procédé selon l'une des revendications précédentes, dans lequel un opérateur est embarqué sur le dispositif motorisé (4) de façon à superviser les opérations de soudage.

11. Cuve comprenant des pièces (2, 3) en acier présentant des bords (21, 31 ; 121, 131) à souder, la cuve étant **caractérisé en ce qu'**au moins une pièce est en acier duplex et **en ce que** les bords (21, 31 ; 121, 131) définissent un jeu (21.31 ; 121.131) qui est inférieur ou égal à 1 mm, de préférence égal à 0 mm, et **en ce que** les bords (21, 31 ; 121, 131) présentent des chanfreins respectifs (21.1, 31.1 ; 121.1, 131.1) qui sont évasés vers une surface externe (23) des pièces (2, 3), le chanfrein (21.1 ; 121.1) de l'un des bords (21 ; 121) étant plus incliné que le chanfrein (31.1 ; 131.1) de l'autre bord (31 ; 131).
